# EUROPEAN PATENT APPLICATION

(11) **EP 4 421 746 A1**
(43) Date of publication of application: **28.08.2024**
(21) Application number: 22900387.6
(22) Date of filing: 25.11.2022
(51) Int. Cl.: G06T 15/06

(54) **RENDERING METHOD AND RELATED DEVICE THEREOF**

(30) Priority: 30.11.2021 CN 202111447462
(71) Applicant: Huawei Technologies Co., Ltd., Shenzhen, Guangdong 518129 (CN)
(72) Inventor: ZHOU, Peng, Shenzhen, Guangdong 518129 (CN); GONG, Zhe, Shenzhen, Guangdong 518129 (CN); XU, Weichao, Shenzhen, Guangdong 518129 (CN); LIN, Che, Shenzhen, Guangdong 518129 (CN)
(74) Representative: Pfenning, Meinig & Partner mbB
(86) International application number: PCT/CN2022/134296
(87) International publication number: WO 2023/098583

(57) **Abstract**

Embodiments of this application disclose a rendering method. The method is applied to a terminal device, and the method includes: obtaining texture information of a light probe in a to-be-rendered virtual scene; performing illumination calculation on the virtual scene based on the texture information of the light probe, to obtain a first irradiance map, where a resolution of the first irradiance map is less than a resolution required by a rendering result of the virtual scene; and performing upsampling on the first irradiance map, to obtain a second irradiance map, where a resolution of the second irradiance map and the resolution required by the rendering result of the virtual scene are the same, and the second irradiance map is used to perform indirect light rendering of the virtual scene. In this application, a resolution-reduced irradiance map (the first irradiance map) is rendered, so that computing overheads can be reduced, and an application can run in real time on a premise of having a global illumination effect.

## Description

This application claims priority to Chinese Patent Application No. 202111447462.4, filed with the China National Intellectual Property Administration on November 30, 2021 and entitled "RENDERING METHOD AND RELATED DEVICE THEREOF", which is incorporated herein by reference in its entirety.

### TECHNICAL FIELD

This application relates to the computer field, and in particular, to a rendering method and a related device thereof.

### BACKGROUND

In a rendering technology of graphics, to implement a more realistic rendering image, global illumination needs to be considered in both raster-based rendering and ray tracing-based rendering technologies. How to achieve a global illumination effect in real-time rendering is always a difficult problem. Different materials have different effects on the global illumination. Because a surface of a diffuse (diffuse) material scatters illumination information evenly, diffuse global illumination (diffuse global illumination, diffuse GI) has large impact on the global illumination. Due to an attribute that is irrelevant to a viewpoint and that is of the diffuse material, for a static light source scene, scene illumination information may be cached to a corresponding map in a manner like offline baking. During running, the map is directly searched for and interpolation is performed to quickly calculate a global illumination result. However, because a visibility item is ignored, light leakage occurs in the scene.

In an existing global illumination technology, for dynamic global illumination, either a high-performance platform like a computer or a host is required, or baking needs to be performed in advance to meet a low computing power requirement of a terminal device. Therefore, a global illumination technology that can be implemented on the terminal device is urgently needed.

### SUMMARY

According to a first aspect, this application provides a rendering method. The method is applied to a terminal device, and the method includes:
obtaining texture information of a light probe in a to-be-rendered virtual scene. Rendering is a process of drawing 3D (3-dimension) data stored in a text binary manner or the like into an image. The virtual scene may also be referred to as a space scene, and is virtual space, for example, indoor virtual space or shopping mall virtual space. There may be a light source and an object in the space scene. Different objects may be set based on different virtual space.

The method further includes: performing illumination calculation on the virtual scene based on the texture information of the light probe, to obtain a first irradiance map, where a resolution of the first irradiance map is less than a resolution required by a rendering result of the virtual scene.

Specifically, when the first irradiance map is obtained through calculation, texture information of an adjacent light probe of each pixel in the first irradiance map may be obtained, and weighted-based interpolation is performed on the texture information of the adjacent light probe.

It can be learned based on a physical optical principle that an illumination effect at each location in space may be considered as a superposition of illumination effects of all surrounding light emitting points at the point. Therefore, after an illumination condition at a location of each light probe in space is obtained, to obtain an illumination condition at a target object (a target location) in space, illumination information of several light probes near the target location may be first obtained, and then the several light probes are used as light sources for calculating diffuse reflection that is of light beams emitted by the several light probes and that is at the target location, so as to obtain the illumination information of the target location, namely, a pixel value of each pixel point in the first irradiance map.

The method further includes: performing upsampling on the first irradiance map, to obtain a second irradiance map, where a resolution of the second irradiance map and the resolution required by the rendering result of the virtual scene are the same, and the second irradiance map is used to perform indirect light rendering of the virtual scene.

To obtain an irradiance map with the same resolution as the resolution required by the rendering result of the virtual scene, upsampling needs to be performed on the first irradiance map, to obtain the second irradiance map with the same resolution as the resolution required by the rendering result of the virtual scene.

In an existing implementation, shading calculation of an original resolution is performed at the original resolution, which causes a large computing load and cannot adapt to a computing power requirement of a mobile terminal, and consequently, an application cannot run smoothly. In embodiments of this application, a resolution-reduced irradiance map (the first irradiance map) is rendered, so that computing overheads can be reduced, and an application can run in real time on a premise of having a global illumination effect.

In a possible implementation, an aspect ratio of the first irradiance map is consistent with an aspect ratio of the second irradiance map, and a quantity of pixel points of the first irradiance map is less than a quantity of pixel points of the second irradiance map.

In a possible implementation, the method further includes: obtaining direct light light source information in the virtual scene; and performing illumination calculation on the virtual scene based on the direct light light source information in a shadow map (shadow map) manner, to obtain a third irradiance map, where the third irradiance map is used to perform direct light rendering of the virtual scene.

In this embodiment of this application, direct light shading of the intersection point may be calculated in the shadow map manner, the intersection point is converted to an angle of view of the light source, and a depth value of the intersection point is compared with a depth value of the shadow map, to determine visibility between the intersection point and the light source.

In a possible implementation, the indirect illumination and the direct illumination may be superimposed, and are used as a final synthesis output.

In the foregoing manner, in the conventional technology, when direct light shading is performed on an intersection point of a ray emitted by a probe and a scene, another ray needs to be emitted to determine visibility between a light source and the intersection point, which has high calculation costs and is not suitable for computing power of a mobile terminal. In this embodiment of this application, direct light shading is performed in the shadow map manner instead of an original ray tracing manner. On a premise that original image quality is ensured, overheads of direct light computing are reduced, so that a probe update speed is faster, and an application can run in real time.

In a possible implementation, the performing upsampling on the first irradiance map, to obtain a second irradiance map includes:
performing upsampling on the first irradiance map according to a neighborhood search algorithm, to obtain the second irradiance map.

Because the resolution of the first irradiance map is less than the resolution required by the rendering result of the virtual scene, if indirect light rendering is directly performed based on the first irradiance map, an aliasing phenomenon occurs in the rendering result. Therefore, in this embodiment of this application, a closest value may be found for an original shading point in a neighborhood search manner, to reduce an aliasing phenomenon.

In a possible implementation, the first irradiance map includes a plurality of first pixel points (for example, may be determined by performing table lookup based on uv coordinates), the second irradiance map includes a second pixel point, the second pixel point corresponds to a target pixel point in the first irradiance map in location, and the target pixel point is adjacent to the plurality of first pixel points. When upsampling is performed on the first irradiance map according to the neighborhood search algorithm, specifically, based on information indicating that there is a first pixel point of which similarity to the target pixel point is greater than a threshold in the plurality of first pixel points, the second pixel point may be obtained based on the first pixel point of which similarity is greater than the threshold; or an average value calculation is performed on the plurality of first pixel points based on information indicating that there is no first pixel point of which similarity to the target pixel point is greater than the threshold in the plurality of first pixel points, to obtain the second pixel point.

Specifically, indirect light shading may be performed on a pixel of the original resolution based on the first irradiance map and according to a neighborhood search policy. In an implementation of performing the neighborhood search policy, a pixel within a specific range around a corresponding point of the first irradiance map may be used as a candidate value, and determining is performed based on conditions such as a normal and a distance. If a threshold condition is met, the candidate value is directly selected for calculating the indirect illumination; otherwise, an average value of points within the range is used to calculate the indirect illumination.

In a possible implementation, the method further includes:
performing average value calculation on the plurality of first pixel points based on information indicating that there is no first pixel point of which similarity to the target pixel point is greater than the threshold in the plurality of first pixel points, to obtain the second pixel point.

In a possible implementation, the neighborhood search algorithm is used to perform anti-aliasing on the first irradiance map.

In a possible implementation, the performing illumination calculation on the virtual scene based on the texture information of the light probe includes: obtaining texture information of an adjacent light probe of each pixel in the first irradiance map; and performing weighted-based interpolation on the texture information of the adjacent light probe.

According to a second aspect, this application provides a rendering apparatus. The apparatus is used in a terminal device, and the apparatus includes:
an obtaining module, configured to obtain texture information of a light probe in a to-be-rendered virtual scene;
an irradiance map calculation module, configured to perform illumination calculation on the virtual scene based on the texture information of the light probe, to obtain a first irradiance map, where a resolution of the first irradiance map is less than a resolution required by a rendering result of the virtual scene; and
an upsampling module, configured to perform upsampling on the first irradiance map, to obtain a second irradiance map, where a resolution of the second irradiance map and the resolution required by the rendering result of the virtual scene are the same, and the second irradiance map is used to perform indirect light rendering of the virtual scene.

In a possible implementation, an aspect ratio of the first irradiance map is consistent with an aspect ratio of the second irradiance map, and a quantity of pixel points of the first irradiance map is less than a quantity of pixel points of the second irradiance map.

In a possible implementation, the obtaining module is further configured to:
obtain direct light light source information in the virtual scene; and
the irradiance map calculation module is further configured to:
   perform illumination calculation on the virtual scene based on the direct light light source information in a shadow map (shadow map) manner, to obtain a third irradiance map, where the third irradiance map is used to perform direct light rendering of the virtual scene.

In a possible implementation, the upsampling module is specifically configured to:
perform upsampling on the first irradiance map according to a neighborhood search algorithm, to obtain the second irradiance map.

In a possible implementation, the first irradiance map includes a plurality of first pixel points, the second irradiance map includes a second pixel point, the second pixel point corresponds to a target pixel point in the first irradiance map in location, the target pixel point is adjacent to the plurality of first pixel points, and the upsampling module is specifically configured to:
based on information indicating that there is a first pixel point of which similarity to the target pixel point is greater than a threshold in the plurality of first pixel points, obtain the second pixel point based on the first pixel point of which similarity is greater than the threshold.

In a possible implementation, the upsampling module is specifically configured to:
perform average value calculation on the plurality of first pixel points based on information indicating that there is no first pixel point of which similarity to the target pixel point is greater than the threshold in the plurality of first pixel points, to obtain the second pixel point.

In a possible implementation, the neighborhood search algorithm is used to perform anti-aliasing on the first irradiance map.

In a possible implementation, the irradiance map calculation module is specifically configured to:
obtain texture information of an adjacent light probe of each pixel in the first irradiance map; and
perform weighted-based interpolation on the texture information of the adjacent light probe.

According to a third aspect, this application provides a terminal device. The terminal device includes a processor and a memory, and the processor obtains code stored in the memory, to perform the rendering processing method according to any one of the first aspect and the optional implementations of the first aspect.

According to a fourth aspect, this application provides a nonvolatile computer-readable storage medium. The nonvolatile computer-readable storage medium includes computer instructions, used to perform the rendering method according to any one of the first aspect and the optional implementations of the first aspect.

According to a fifth aspect, this application further provides a computer program product, including code, and when the code executed, the rendering method according to any one of the first aspect and the optional implementations of the first aspect is implemented.

According to a sixth aspect, a chip is provided. The chip includes a processor, and the processor is configured to execute some or all operations of the method described in the first aspect.

This application provides a rendering method. The method is applied to a terminal device, and the method includes: obtaining texture information of a light probe in a to-be-rendered virtual scene; performing illumination calculation on the virtual scene based on the texture information of the light probe, to obtain a first irradiance map, where a resolution of the first irradiance map is less than a resolution required by a rendering result of the virtual scene; and performing upsampling on the first irradiance map, to obtain a second irradiance map, where a resolution of the second irradiance map and the resolution required by the rendering result of the virtual scene are the same, and the second irradiance map is used to perform indirect light rendering of the virtual scene. In an existing implementation, shading calculation of an original resolution is performed at the original resolution, which causes a large computing load and cannot adapt to a computing power requirement of a mobile terminal, and consequently, an application cannot run smoothly. In embodiments of this application, a resolution-reduced irradiance map (the first irradiance map) is rendered, so that computing overheads can be reduced, and an application can run in real time on a premise of having a global illumination effect.

### BRIEF DESCRIPTION OF DRAWINGS

FIG. 1 is a schematic diagram of a structure of an electronic device according to this application;
FIG. 2 is a schematic diagram of a structure of an electronic device according to this application;
FIG. 3 is a schematic flowchart of a rendering method according to an embodiment;
FIG. 4 is a schematic diagram of a light probe according to an embodiment;
FIG. 5 is a schematic diagram of a resolution-reduced radiance map according to an embodiment;
FIG. 6 is a schematic flowchart of a rendering method according to an embodiment;
FIG. 7 is a schematic flowchart of a rendering method according to an embodiment;
FIG. 8 is a schematic flowchart of a rendering method according to this application;
FIG. 9 is a schematic diagram of a structure of a rendering apparatus according to an embodiment; and
FIG. 10 is a schematic diagram of a structure of a terminal device according to this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of new scenarios, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. Moreover, the terms "include", "have" and any other variants are intended to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical purpose to be achieved, provided that same or similar technical effects can be achieved.

For ease of understanding of technical solutions of this application, concepts in this application are first briefly described.

Ray tracing (ray tracing): The ray tracing is a special rendering algorithm in three-dimensional computer graphics. In this technology, a ray emitted by a virtual camera is traced, a process of propagation of the ray in a rendering scene is calculated, and finally a mathematical model of the rendering scene is presented. A more realistic rendering effect can be implemented in this method.

Diffuse reflection (diffuse): The diffuse reflection indicates a reflection attribute of an object surface. Light is scattered inside an object and then emitted from an object surface. It is an attribute irrelevant to a viewpoint.

Specular reflection (specular): The specular reflection indicates a reflection attribute of an object surface. Light is directly reflected by an object after the light reaches the object surface. It is an attribute related to a viewpoint.

Radiance (radiance): The radiance is the radiation flux per unit solid angle per unit projected area.

Irradiance (irradiance): The irradiance is the radiation flux per unit area.

Direct illumination (direct illumination): The direct illumination is a technology in which only impact of a direct light source on scene illumination is considered.

Global illumination (global illumination): The global illumination is a technology in which in addition to impact of a direct light source on scene illumination, impact of other objects to each other in a scene is also considered, which is closer to an actual illumination effect.

Shadow map (shadow map, SM): The shadow map is a technology in which to implement a shadow effect in direct illumination, a light source is used as an angle of view to start.

Virtual point light (virtual point light, VPL): The virtual point light is an algorithm for implementing global illumination. A part that is illuminated in direct illumination in a scene is constructed as a virtual point light (VPL), and then illumination contributions of VPLs of the scene to each pixel for imaging are collected, to achieve a global illumination effect.

Reflective shadow map (reflective shadow map, RSM): The reflective shadow map is an algorithm to implement global illumination. In the algorithm, it is assumed that all reflectors in a scene are diffuse materials. A shadow map with a specified resolution is generated as a secondary light source of the scene. Then, for each pixel for imaging, an illumination contribution of the secondary light source to the pixel is calculated based on a distance, discovery direction, and the like.

Light probe (light probe): A probe is also referred to as a probe, and is a data structure that caches scene illumination information. Shading of shading points can be queried from the probe and interpolation calculation can be performed to obtain indirect illumination. The light probe is generally applicable to a static light source scene.

Light map (light map): A static object surface is divided into blocks and expanded to texture space. Shading on an object surface texture performed by a light source in a static scene is calculated in advance, and a result is stored into the "light map" for the following use. It is generally applicable to a static object in the static scene and applicable to a diffuse material.

Dynamic diffuse global illumination (dynamic diffuse global illumination, DDGI): The dynamic diffuse global illumination is a solution to implement global illumination of a dynamic light source and a dynamic object. Indirect illumination information of a scene stored by a light probe is used, and a light tracing manner is used to dynamically update the information, so that a global illumination effect of dynamic diffuse reflection can be achieved.

The following first describes an application architecture of this application. A rendering method provided in this embodiment of this application may be applied to a terminal device (which may also be referred to as an electronic device). The terminal device may also be referred to as user equipment (user equipment, UE) or an electronic device, and may be deployed on land, and includes an indoor or outdoor device, a hand-held device, or a vehicle-mounted device. The terminal device may alternatively be deployed on water (for example, on a ship), or may be deployed in the air (for example, on an airplane, a balloon, or a satellite). The electronic device may be a mobile phone (mobile phone), a pad (pad), a wearable device (like a smartwatch) having a wireless communication function, a location tracker having a positioning function, a computer having a wireless transceiver function, a virtual reality (virtual reality, VR) device, an augmented reality (augmented reality, AR) device, a wireless device in a smart home (smart home), or the like. This is not limited in this application. In this application, the foregoing electronic device and a chip that can be disposed in the foregoing electronic device are collectively referred to as an electronic device.

The electronic device in this application may include but is not limited to a smart mobile phone, a television, a pad, a wristband, a head mount display (Head Mount Display, EA4D) device, an augmented reality (augmented reality, AR) device, a mixed reality (mixed reality, MR) device, a cellular phone (cellular phone), a smartphone (smartphone), a personal digital assistant (personal digital assistant, PDA), a tablet computer, a vehicle-mounted electronic device, a laptop computer (laptop computer), a personal computer (personal computer, PC), a monitoring device, a robot, a vehicle-mounted terminal, an autonomous vehicle, and the like. Certainly, in the following embodiments, specific forms of these electronic devices are not limited.

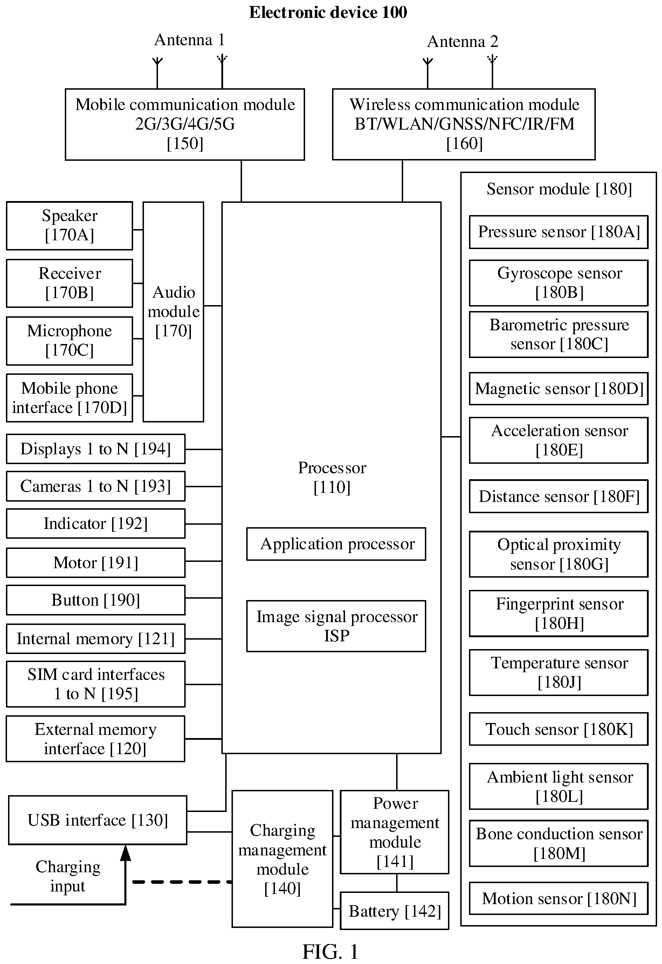

For example, refer to FIG. 1. The following uses a specific structure as an example to describe a structure of an electronic device provided in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a motion sensor 180N, and the like.

It may be understood that the structure shown in this embodiment of the present invention does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus that includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to perform data transmission between the electronic device 100 and a peripheral device, or may be configured to connect to a headset to play audio by using the headset. The interface may be further configured to connect to another electronic device like an AR device.

It may be understood that an interface connection relationship between the modules that is shown in embodiments of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include but is not limited to: a 5th-generation (5th-generation, 5G) mobile communication technology system, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth (Bluetooth), a global navigation satellite system (the global navigation satellite system, GNSS), wireless fidelity (wireless fidelity, Wi-Fi), near field communication (near field communication, NFC), FM (may also be referred to as frequency modulation), Zigbee (Zigbee), a radio frequency identification (radio frequency identification, RFID) technology, an infrared (infrared, IR) technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some implementations, the electronic device 100 may also include a wired communication module (which is not shown in FIG. 1), or the mobile communication module 150 or the wireless communication module 160 herein may be replaced with a wired communication module (which is not shown in FIG. 1). The wired communication module may enable the electronic device to communicate with another device through a wired network. The wired network may include but is not limited to one or more of the following: an optical transport network (optical transport network, OTN), a synchronous digital hierarchy (synchronous digital hierarchy, SDH), a passive optical network (passive optical network, PON), the Ethernet (Ethernet), the flexible Ethernet (flexible Ethernet, FlexE), and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting-diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and a ray is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS). The processor 110 runs the instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile electronic device platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. The gyroscope sensor 180B may be configured to determine a motion posture of the electronic device 100. The barometric pressure sensor 180C is configured to measure barometric pressure. In some embodiments, the electronic device 100 calculates an altitude based on a barometric pressure value measured by the barometric pressure sensor 180C, to assist in positioning and navigation. The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature like automatic unlocking of the flip cover is set based on a detected opening or closing state of the leather case or a detected opening or closing state of the flip cover. The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer. The distance sensor 180F is configured to measure a distance. The electronic device 100 may measure the distance in an infrared manner or a laser manner. In some embodiments, in a photographing scene, the electronic device 100 may measure a distance by using the distance sensor 180F, to implement quick focusing. The optical proximity sensor 180G may include, for example, a light emitting diode (LED) and an optical detector, for example, a photodiode. The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may also be disposed in the headset, to combine into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The motion sensor 180N may be configured to: detect a moving object within a photographing range of a camera, and collect a moving contour, a moving trajectory, or the like of the moving object. For example, the motion sensor 180N may be an infrared sensor, a laser sensor, or a dynamic vision sensor (dynamic vision sensor, DVS). The DVS may specifically include a sensor like a DAVIS (Dynamic and Active-pixel Vision Sensor), an ATIS (Asynchronous Time-based Image Sensor), or a CeleX sensor. The DVS draws on a characteristic of biological vision. Each pixel simulates one neuron and independently responds to a relative change in illumination intensity ("illumination intensity" for short hereinafter). When the relative change in the illumination intensity exceeds a threshold, a pixel outputs an event signal, where the event signal includes a location of the pixel, a time stamp, and feature information of the illumination intensity.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like. The SIM card interface 195 is configured to connect to a SIM card.

The following describes a schematic diagram of a system architecture according to an embodiment of this application.

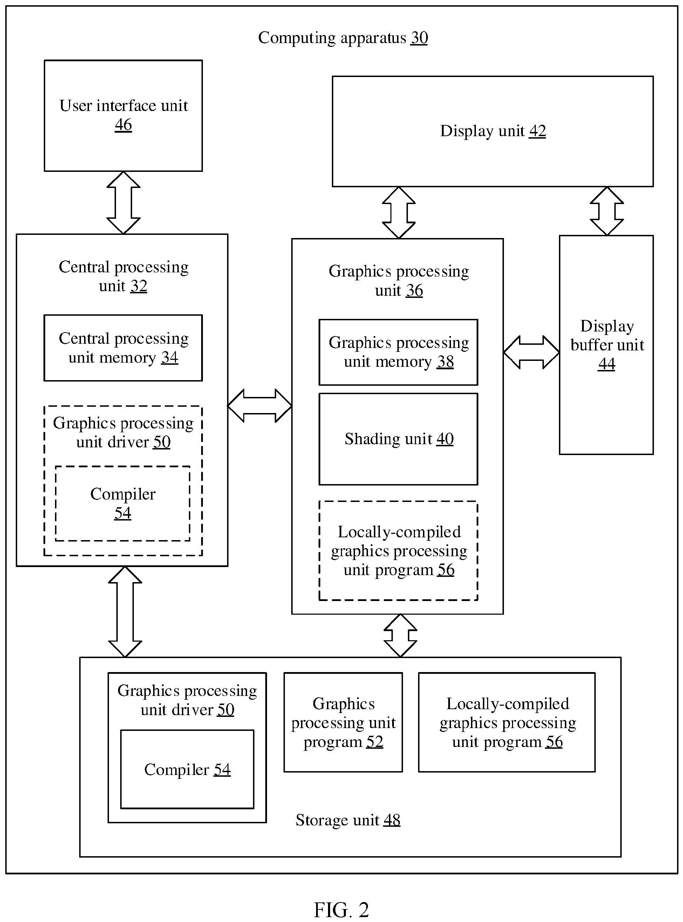

FIG. 2 is a block diagram of a computing apparatus 30 that can implement a technology described in the present invention. The computing apparatus 30 may be a rendering apparatus in embodiments of this application, and is configured to implement a rendering method in embodiments of this application. An example of the computing apparatus 30 includes but is not limited to a wireless apparatus, a mobile or cellular phone (including a smartphone), a personal digital assistant (personal digital assistant, PDA), a video game console including a video display, a mobile video game apparatus, a mobile video conference unit, a laptop computer, a desktop computer, a television set-top box, a tablet computing apparatus, an e-book reader, a fixed or a mobile media player, or the like.

In the example of FIG. 2, the computing apparatus 30 includes a central processing unit (central processing unit, CPU) 32 having a CPU memory 34, a graphics processing unit (graphics processing unit, GPU) 36 having a GPU memory 38 and one or more shading units 40, a display unit 42, a display buffer unit 44, a user interface unit 46, and a storage unit 48. In addition, the storage unit 48 may store a GPU driver 50 having a compiler 54, a GPU program 52, and a locally-compiled GPU program 56.

An example of the CPU 32 includes but is not limited to a digital signal processor (DSP), a general-purpose microprocessor, an application-specific integrated circuit (ASIC), a field programmable gate array (FPGA), or another equivalent integrated or discrete logic circuit. Although the CPU 32 and the GPU 36 are illustrated as separate units in the example of FIG. 2, in some examples, the CPU 32 and the GPU 36 may be integrated into a single unit. The CPU 32 may execute one or more applications. An example of the application may be a web browser, an email application, a spreadsheet, a video game, an audio and/or video capture, playback, or editing application, or another application that initiates the generation for image data to be presented via display unit 42.

In the example shown in FIG. 2, the CPU 32 includes a CPU memory 34. The CPU memory 34 may represent an on-chip storage device or memory used when machine or object code is executed. The CPU memory 34 may each include a hardware memory register capable of storing a fixed quantity of digital bits. Compared with reading a value from the storage unit 48 (for example, which may be accessed through a system bus) or writing a value to the storage unit 48, the CPU 32 may be able to read a value from the local CPU memory 34 or write a value to the local CPU memory 34 more quickly.

The GPU 36 represents one or more dedicated processors for performing graphics operations. In other words, for example, the GPU 36 may be a dedicated hardware unit with a fixed function and a programmable component for rendering graphics and executing a GPU application. The GPU 36 may further include a DSP, a general-purpose microprocessor, an ASIC, an FPGA, or another equivalent integrated or discrete logic circuit.

The GPU 36 further includes the GPU memory 38, which may represent an on-chip storage device or memory used when machine or object code is executed. The GPU memory 38 may each include a hardware memory register capable of storing a fixed quantity of digital bits. Compared with reading a value from the storage unit 48 (for example, which may be accessed through a system bus) or writing a value to the storage unit 48, the GPU 36 may be able to read a value from the local GPU memory 38 or write a value to the local GPU memory 38 more quickly.

The GPU 36 further includes a shading unit 40. As described in more detail below, the shading unit 40 may be configured as a programmable pipeline of a processing component. In some examples, the shading unit 40 may be referred to as a "shader processor" or a "unified shader", and may perform geometry, vertex, pixel, or another shader operation to render the graphics. The shading unit 40 may include one or more components not specifically shown in FIG. 2 for a purpose of clarity, such as components for fetching and decoding instructions, one or more arithmetic and logic units (arithmetic and logic unit, ALU) for performing arithmetic calculations, and one or more memories, caches, or registers.

The display unit 42 represents a unit capable of displaying video data, an image, a text, or any other type of data. The display unit 42 may include a liquid crystal display (liquid crystal display, LCD), a light-emitting diode (light-emitting diode, LED) display, an organic LED (organic light-emitting diode, OLED) display, an active-matrix OLED (active-matrix organic light-emitting diode, AMOLED) display, and the like.

The display buffer unit 44 represents a memory or storage apparatus dedicated to storing data for the display unit 42 for presenting an image (for example, a photo or a video frame). The display buffer unit 44 may represent a two-dimensional buffer including a plurality of storage locations. A quantity of storage locations within the display buffer unit 44 may be substantially similar to a quantity of pixels to be displayed on the display unit 42. For example, if the display unit 42 is configured to include 640*480 pixels, the display buffer unit 44 may include 640*480 storage locations. The display buffer unit 44 may store a final pixel value for each of pixels processed by the GPU 36. The display unit 42 may retrieve the final pixel value from the display buffer unit 44 and display a final image based on the pixel value stored in the display buffer unit 44.

The user interface unit 46 represents a unit that may be used by a user to interact with another unit (for example, the CPU 32) of the computing apparatus 30 or interface in another manner to communicate with another unit of the computing apparatus 30. An example of the user interface unit 46 includes but is not limited to a trackball, a mouse, a keyboard, or another type of an input apparatus. The user interface unit 46 may alternatively be a touchscreen, and may be integrated as a part of the display unit 42.

The storage unit 48 may include one or more computer-readable storage media. An example of the storage unit 48 includes but is not limited to a random access memory (RAM), a read-only memory (ROM), an electrically erasable programmable read-only memory (EEPROM), a CD-ROM or another optical disc storage apparatus, a magnetic disk storage apparatus or another magnetic storage apparatus, a flash memory, or any other medium that can be used to store desired program code in a form of instruction or data structure and that can be accessed by a computer or a processor.

In some example implementation solutions, the storage unit 48 may include instructions that enable the CPU 32 and/or the GPU 36 to execute functions of the CPU 32 and the GPU 36 in the present invention. In some examples, the storage unit 48 may be considered as a non-transitory storage medium. The term "non-transitory" may indicate that the storage medium is not embodied in a carrier or a propagated signal. However, the term "non-transitory" should not be interpreted to mean that storage unit 48 is non-movable. As an example, the storage unit 48 may be removed from the computing apparatus 30 and moved to another apparatus. As another example, a storage unit substantially similar to the storage unit 48 may be inserted into the computing apparatus 30. In some examples, the non-transitory storage medium may store data that may change over time (for example, in a RAM).

The storage unit 48 stores the GPU driver 50, the compiler 54, the GPU program 52, and the locally-compiled GPU program 56. The GPU driver 50 represents a computer program or executable code that provides an interface for accessing the GPU 36. The CPU 32 executes the GPU driver 50 or several portions thereof to connect to the GPU 36, and for this reason, the GPU driver 50 is shown in the example of FIG. 2 as a dashed-line box marked GPU driver 50 within the CPU 32. The GPU driver 50 may access a program or another executable file executed by the CPU 32, including the GPU program 52.

The GPU program 52 may include code written in a high level (HL) programming language (for example, by using an application programming interface (API)). An example of the API includes an open graphics library (OpenGL). In general, the API includes a predetermined standardized set of commands executed by associated hardware. The API commands allow a user to instruct hardware components of a GPU to execute commands, and there is no need for the user to know the specifics of the hardware components.

The GPU program 52 may invoke or include, in another manner, one or more functions provided by the GPU driver 50. The CPU 32 generally executes a program in which the GPU program 52 is embedded, and immediately transfers the GPU program 52 to the GPU driver 50 (for example, in a form of command stream) after encountering the GPU program 52. The CPU 32 executes the GPU driver 50 in this context to process the GPU program 52. For example, the GPU driver 50 may process the GPU program 52 by compiling the GPU program into an object or machine code executable by the GPU 36. This object code is shown in the example of FIG. 2 as the locally-compiled GPU program 56.

In some examples, the compiler 54 may operate in real time or near real time, to compile the GPU program 52 during execution of the program in which the GPU program 52 is embedded. For example, the compiler 54 generally represents a module that simplifies HL instructions defined in the HL programming language into LL instructions in a low level (LL) programming language. After compilation, these LL instructions can be executed by a specific type of processor or another type of hardware (like an FPGA and an ASIC (including, for example, the CPU 32 and the GPU 36)).

In the example of FIG. 2, the compiler 54 may receive the GPU program 52 from the CPU 32 when HL code including the GPU program 52 is executed. The compiler 54 may compile the GPU program 52 into the locally-compiled GPU program 56 that conforms to the LL programming language. The compiler 54 then outputs the locally-compiled GPU program 56 that includes the LL instructions.

The GPU 36 generally receives the locally-compiled GPU program 56 (for example, shown as a dashed-line box marked "locally-compiled GPU program 56" in the GPU 36). After that, in some examples, the GPU 36 immediately renders an image and outputs a rendered part of the image to the display buffer unit 44. For example, the GPU 36 may generate a plurality of primitives to be displayed on the display unit 42. The primitives may include one or more lines (including curves, splines, or the like), a point, a circle, an ellipse, a polygon (where a polygon is usually defined as a set of one or more triangles), or any other two-dimensional (2D) primitive. The term "primitive" may also refer to a three-dimensional (3D) primitive, for example, a cube, a cylinder, a sphere, a cone, a pyramid, or a ring. In general, the term "primitive" is any geometric shape or element rendered by the GPU 36 for display as an image (or a frame in the context of video data) on the display unit 42.

The GPU 36 may transform the primitives or other state data (that defines, such as texture, brightness, camera configuration, or another aspect of the primitives) of the primitives into so-called "world space" by applying one or more model transformations (which may also be specified in the state data). Once transformed, the GPU 36 may apply a view transform for the effective camera (which may also be specified in the state data defining the camera) to transform coordinates of the primitives and light into the camera or eye space. The GPU 36 may also perform vertex shading to render the appearance of the primitives in the view of any effective light. The GPU 36 may perform vertex shading in one or more of the model, the world, and the view space described above (although vertex shading is commonly performed in the world space).

Once the primitives are shaded, the GPU 36 may perform projection to project the image into a unit cube with extreme points, as an example, at (-1, -1, -1) and (1, 1, 1). This unit cube is commonly referred to as a canonical view volume. After transforming the model from the eye space to the canonical view volume, the GPU 36 may perform clipping to remove any primitive that does not at least partially reside within the view volume. In other words, the GPU 36 may remove any primitive that is not within the frame of the camera. The GPU 36 may then map the coordinates of the primitives from the view volume to the screen space, to effectively simplify the 3D coordinates of the primitives to the 2D coordinates on the screen.

Given a transformed and projected vertex defining the primitives with associated shading data thereof, the GPU 36 may then rasterize the primitives. For example, the GPU 36 may calculate and set colors for the pixels of the screen covered by the primitives. During rasterization, the GPU 36 may apply any texture associated with the primitives (where the texture may include state data). The GPU 36 may also perform a Z-buffer algorithm (also referred to as a depth test) during rasterization, to determine whether any primitive and/or object is occluded by any other object. The Z-buffer algorithm sorts the primitives based on the depth of the primitives, so that the GPU 36 knows the order in which each primitive is drawn to the screen. The GPU 36 outputs the rendered pixels to the display buffer unit 44.

The display buffer unit 44 may temporarily store the rendered pixels of the rendered image until the entire image is rendered. In this context, the display buffer unit 44 may be considered as an image frame buffer. The display buffer unit 44 may then transmit the rendered image to be displayed on the display unit 42. In some alternative examples, the GPU 36 may directly output the rendered part of the image to the display unit 42 for display, instead of temporarily storing the image in the display buffer unit 44. The display unit 42 may then display the image stored in the display buffer unit 78.

In a rendering technology of graphics, to implement a more realistic rendering image, global illumination needs to be considered in both rasterization rendering and ray tracing-based rendering technologies. How to achieve a global illumination effect in real-time rendering is always a difficult problem. Different materials have different effects on the global illumination. Because a surface of a diffuse (diffuse) material scatters illumination information evenly, diffuse global illumination (diffuse global illumination, diffuse GI) has large impact on the global illumination. Due to an attribute that is irrelevant to a viewpoint and that is of the diffuse material, for a static light source scene, scene illumination information may be cached to a corresponding map in a manner like offline baking. During running, the map is directly searched for and interpolation is performed to quickly calculate a global illumination result. However, because a visibility item is ignored, light leakage occurs in the scene.

In an existing global illumination technology, for dynamic global illumination, either a high-performance platform like a computer or a host is required, or baking needs to be performed in advance to meet a low computing power requirement of a terminal device. Therefore, a global illumination technology that can be implemented on the terminal device is urgently needed.

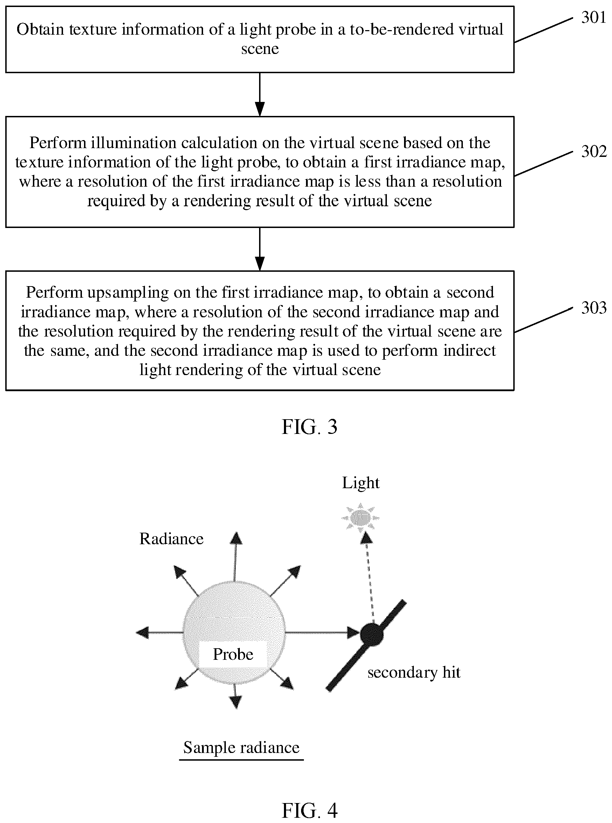

In FIG. 3, steps of a rendering method provided in an embodiment are described in detail in the following. FIG. 3 is a schematic flowchart of a rendering method according to an embodiment of this application. The method may be applied to the terminal device shown in FIG. 1 and FIG. 2. As shown in FIG. 3, the rendering method may include the following steps.

301: Obtain texture information of a light probe in a to-be-rendered virtual scene.

Rendering is a process of drawing 3D (3-dimension) data stored in a text binary manner or the like into an image. The virtual scene may also be referred to as a space scene, and is virtual space, for example, indoor virtual space or shopping mall virtual space. There may be a light source and an object in the space scene. Different objects may be set based on different virtual space.

In a possible implementation, geometric processing may be performed before formal rendering is started. A geometric processing phase may include but is not limited to steps such as viewpoint transformation, vertex shading, projection, clipping, and scene acceleration structure construction.

Specifically, before formal rendering is started, after setting a rendering scene, a user may select a rendering angle of view. The angle of view determines content of an image during final imaging, and also affects a contribution of a light source in the scene to imaging. After scene parsing is completed, information such as a light source, a material, and an acceleration structure of geometric data of the scene is obtained, for indirect light calculation.

In a possible implementation, model material loading may be performed on the virtual scene, and two parts are mainly involved. A first part is to add a model that needs to be rendered to the scene, and a second part is to add material information and texture information of the model in the scene.

In a possible implementation, before indirect light calculation, a parameter of the light probe in the scene needs to be initialized.

The light probe may be a tool of a plurality of development engines, for example, Unity and Unreal Engine (UE, imaginary engine), and related information of a ray passing through blank space of the scene can be captured and used by using the light probe. The light probe is similar to a light map commonly used in the conventional rendering technology, and both the light probe and the light map store "baking" information related to illumination in the scene. A difference lies in that the light map stores related illumination information indicating that a ray shines on a surface in the scene, while the light probe stores related information indicating that a ray passes through the blank space in the scene.

In a possible implementation, a cube may be placed in the virtual scene corresponding to a to-be-displayed image frame in advance to mark an area in which the light probe needs to be placed, and the light probe is placed in the area. The virtual scene includes a virtual object. After the cube is placed in the virtual scene to mark the area in which the light probe is located, the light probe may be placed in the area based on a preset density. When the density of the light probe is higher, an illumination effect obtained by performing diffuse reflection calculation subsequently is closer to that in a real situation, but a computation amount increases with an increase of a placement density. The user may balance the light probe and a computing capability of a processor based on a processing capability of the processor, to properly set the density of the light probe.

The light probe may be evenly placed in the area marked by the cube, or may be unevenly placed in the area marked by the cube. This is not limited in this application. Certainly, a person skilled in the art may understand that, in addition to using the cube to mark the area in which the light probe is placed, another polyhedron may alternatively be used to mark the area in which the light probe is placed. This is not limited in this application.

In addition, when the cube is used to mark an area in which the light probe is placed, and the light probe is evenly placed in the marked area, if diffuse reflection calculation is performed on a ray emitted by the light probe, complexity of the diffuse reflection calculation can be greatly reduced, and a requirement for the computing capability of the processor can be reduced.

In a possible implementation, it may be determined, based on an actual scene, whether the probe needs to be updated for a frame of the current to-be-rendered virtual scene, or previous probe information is still used. When the probe needs to be updated, intersection may be performed on a ray emitted by each probe and a scene acceleration structure, and an intersection point may be shaded. Shading may include two parts: direct light shading and indirect light shading. The direct light shading of the intersection point may be in a shadow map manner, to determine visibility between the intersection point and the light source, so as to calculate direct illumination of the current point. The indirect light shading of the intersection point may be in a probe interpolation manner, to perform weighted calculation on a probe of a neighboring grid based on a distance, so as to obtain indirect illumination of the intersection point. Then, the texture information of the probe may be obtained through calculation based on a shading value of each intersection point and the texture information of the previous probe in a weighted average value manner.

In a possible implementation, for example, in an indirect light calculation phase, a ray may be emitted from the probe and a radiance of the intersection point may be calculated. As shown in FIG. 4, in this embodiment, each probe may emit a plurality of (for example, 144) rays, and then intersection points between the rays and the scene are calculated. After a radiance of each ray is calculated, the texture information of the probe can be updated based on this, and weighted fusion can be performed based on the historical texture.

More specifically, one light probe is used as an example, a ray tracing function of a development engine may be used to enable the light probe to randomly emit a specified quantity of rays in a 360° space range, for example, emit 144 rays, and perform ray tracing on all the emitted light, so as to obtain illumination information at a location of the light probe. A basic principle is as follows: When the ray emitted by the light probe hits the virtual object in the virtual scene, it can be learned according to an optical principle that the emitted ray is diffusely reflected by a surface of the virtual object, and a part of the diffusely reflected light beam hits a location of the light probe. Therefore, ray tracing can be performed on the ray emitted by each light probe in the current frame, to obtain texture information (or may be referred to as illumination information) at a location of each light probe when all rays emitted by each light probe are diffusely reflected by the object in the virtual scene. The illumination information includes information about irradiance of light at the location of the light probe, and may further include direction information of a light beam at the location of the light probe.

302: Perform illumination calculation on the virtual scene based on the texture information of the light probe, to obtain a first irradiance map, where a resolution of the first irradiance map is less than a resolution required by a rendering result of the virtual scene.

In a possible implementation, after texture information of a plurality of light probes in the virtual scene is obtained, illumination calculation may be performed on the virtual scene based on the texture information of the light probe, to obtain the first irradiance map.

Specifically, indirect illumination of an imaging point may be calculated based on the texture information of the light probe (probe). Specifically, a resolution-reduced irradiance map may be rendered based on an imaging resolution. Weighted interpolation may be performed on each pixel in the irradiance map by querying texture information of an adjacent probe. The resolution required by the rendering result of the virtual scene may be understood as the imaging resolution required by the virtual scene.

In an existing implementation, shading calculation of an original resolution is performed at the original resolution, which causes a large computing load and cannot adapt to a computing power requirement of a mobile terminal, and consequently, an application cannot run smoothly. In embodiments of this application, a resolution-reduced irradiance map (the first irradiance map) is rendered, so that computing overheads can be reduced, and an application can run in real time on a premise of having a global illumination effect.

Specifically, when the first irradiance map is obtained through calculation, texture information of an adjacent light probe of each pixel in the first irradiance map may be obtained, and weighted-based interpolation is performed on the texture information of the adjacent light probe.

It can be learned based on a physical optical principle that an illumination effect at each location in space may be considered as a superposition of illumination effects of all surrounding light emitting points at the point. Therefore, after an illumination condition at the location of each light probe in space is obtained, to obtain an illumination condition at a target object (a target location) in space, illumination information of several light probes near the target location may be first obtained, and then the several light probes are used as light sources for calculating diffuse reflection that is of light beams emitted by the several light probes and that is at the target location, so as to obtain the illumination information of the target location, namely, a pixel value of each pixel point in the first irradiance map.

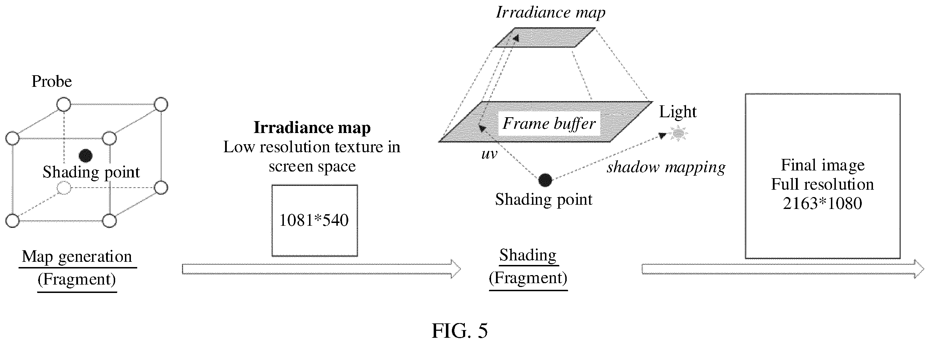

In a possible implementation, an aspect ratio of the first irradiance map is consistent with an aspect ratio of a second irradiance map (a resolution of the second irradiance map is consistent with the resolution required by the rendering result of the virtual scene), and a quantity of pixel points of the first irradiance map is less than a quantity of pixel points of the second irradiance map. For example, refer to FIG. 5.

303: Perform upsampling on the first irradiance map, to obtain the second irradiance map, where the resolution of the second irradiance map and the resolution required by the rendering result of the virtual scene are the same, and the second irradiance map is used to perform indirect light rendering of the virtual scene.

To obtain an irradiance map with the same resolution as the resolution required by the rendering result of the virtual scene, upsampling needs to be performed on the first irradiance map, to obtain the second irradiance map with the same resolution as the resolution required by the rendering result of the virtual scene.

Because the resolution of the first irradiance map is less than the resolution required by the rendering result of the virtual scene, if indirect light rendering is directly performed based on the first irradiance map, an aliasing phenomenon occurs in the rendering result. Therefore, in this embodiment of this application, a closest value may be found for an original shading point in a neighborhood search manner, to reduce an aliasing phenomenon.

In a possible implementation, when upsampling is performed on the first irradiance map, to obtain the second irradiance map, specifically, upsampling may be performed on the first irradiance map according to a neighborhood search algorithm, to obtain the second irradiance map.

In a possible implementation, the first irradiance map includes a plurality of first pixel points (for example, may be determined by performing table lookup based on uv coordinates), the second irradiance map includes a second pixel point, the second pixel point corresponds to a target pixel point in the first irradiance map in location, and the target pixel point is adjacent to the plurality of first pixel points. When upsampling is performed on the first irradiance map according to the neighborhood search algorithm, specifically, based on information indicating that there is a first pixel point of which similarity to the target pixel point is greater than a threshold in the plurality of first pixel points, the second pixel point may be obtained based on the first pixel point of which similarity is greater than the threshold; or an average value calculation is performed on the plurality of first pixel points based on information indicating that there is no first pixel point of which similarity to the target pixel point is greater than the threshold in the plurality of first pixel points, to obtain the second pixel point.

In a possible implementation, the neighborhood search algorithm is used to perform anti-aliasing on the first irradiance map.

Specifically, indirect light shading may be performed on a pixel of the original resolution based on the first irradiance map and according to a neighborhood search policy. In an implementation of performing the neighborhood search policy, a pixel within a specific range around a corresponding point of the first irradiance map may be used as a candidate value, and determining is performed based on conditions such as a normal and a distance. If a threshold condition is met, the candidate value is directly selected for calculating the indirect illumination; otherwise, an average value of points within the range is used to calculate the indirect illumination.

In a probe shading phase, the resolution is reduced to generate the irradiance map. Then, during final imaging, the pixel value closest to the shading point is found in the irradiance map. In this embodiment, for the shading point, texture information of a plurality of (for example, eight) probes adjacent to the shading point may be queried for illumination calculation. For example, a final imaging resolution may be 2163 * 1080, the resolution of the irradiance map is reduced by a factor of two times, and only an image with a resolution of 1081*540 may be rendered. During final imaging, the same uv coordinates are used to perform table lookup in the irradiance map. For the found pixel, similarity search needs to be performed on the adjacent elements to find the closest pixel for shading. In this embodiment, similarity search is performed on a plurality of (for example, four) adjacent pixels, namely, (-1, -1), (-1, 1), (1, -1), and (1, 1), and an actual shading point (0, 0), to determine a similarity of a normal and a similarity of a depth value of a candidate pixel of the actual shading point, so as to select a closest pixel point value. When none of the candidate pixels meets the condition, it is fallen back to a case of calculating the average value. A purpose of the neighborhood search is to eliminate an aliasing problem caused by rendering the resolution-reduced irradiance map.

In a possible implementation, direct light light source information in the virtual scene may be further obtained; and illumination calculation is performed on the virtual scene based on the direct light light source information in a shadow map (shadow map) manner, to obtain a third irradiance map, where the third irradiance map is used to perform direct light rendering of the virtual scene.

In this embodiment of this application, direct light shading of the intersection point may be calculated in the shadow map manner, the intersection point is converted to an angle of view of the light source, and a depth value of the intersection point is compared with a depth value of the shadow map, to determine visibility between the intersection point and the light source.

In a possible implementation, the indirect illumination and the direct illumination may be superimposed, and are used as a final synthesis output.

In the foregoing manner, in the conventional technology, when direct light shading is performed on an intersection point of a ray emitted by a probe and a scene, another ray needs to be emitted to determine visibility between a light source and the intersection point, which has high calculation costs and is not suitable for computing power of a mobile terminal. In this embodiment of this application, direct light shading is performed in the shadow map manner instead of an original ray tracing manner. On a premise that original image quality is ensured, overheads of direct light computing are reduced, so that a probe update speed is faster, and an application can run in real time.

This application provides a rendering method. The method is applied to a terminal device, and the method includes: obtaining texture information of a light probe in a to-be-rendered virtual scene; performing illumination calculation on the virtual scene based on the texture information of the light probe, to obtain a first irradiance map, where a resolution of the first irradiance map is less than a resolution required by a rendering result of the virtual scene; and performing upsampling on the first irradiance map, to obtain a second irradiance map, where a resolution of the second irradiance map and the resolution required by the rendering result of the virtual scene are the same, and the second irradiance map is used to perform indirect light rendering of the virtual scene. In an existing implementation, shading calculation of an original resolution is performed at the original resolution, which causes a large computing load and cannot adapt to a computing power requirement of a mobile terminal, and consequently, an application cannot run smoothly. In embodiments of this application, a resolution-reduced irradiance map (the first irradiance map) is rendered, so that computing overheads can be reduced, and an application can run in real time on a premise of having a global illumination effect.

The following describes a system architecture in embodiments of this application from a perspective of a software module.

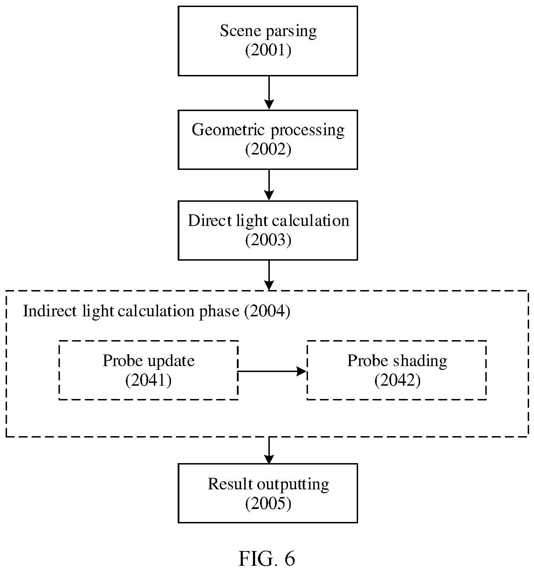

FIG. 6 is a schematic diagram of a system architecture according to an embodiment of this application. The system architecture may include a scene parsing module (2001), a geometric processing phase (2002), direct light calculation (2003), an indirect light calculation phase (2004), and a result outputting module (2005).

The scene parsing module 2001 may parse data such as a model, a material, and a light source of a scene.

The geometric processing phase 2002 includes steps such as viewpoint transformation, vertex shading, projection, clipping, and scene acceleration structure construction, which are pre-steps.

The direct light calculation 2003 is to calculate the impact of a light source included in an original pipeline on shading of the scene.

In the indirect light calculation phase 2004, indirect light calculation may be performed based on a provided scene of a light probe, and the indirect light calculation phase 2004 includes two main modules: a probe update phase 2041 and a probe shading phase 2042.

In the probe update phase 2041, each probe emits a specific quantity of rays to perform intersection with a scene, and after an intersection point is obtained, and shading information and distance information are obtained, information of a corresponding probe is updated.

In the probe shading phase 2042, a pixel of each probe in a final imaging phase is shaded.

The result outputting module 2005 may perform synthesis on the direct light and the indirect light, and store a final rendering result.

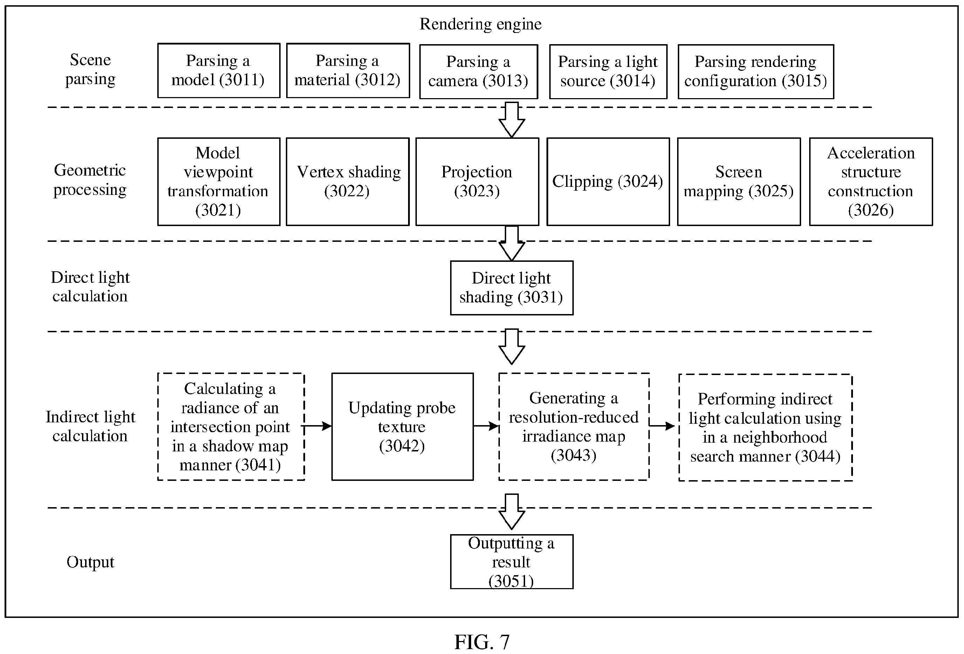

A product implementation form in this embodiment of this application is program code included in rendering engine software. A system framework shown in FIG. 7 is used as an example. The program code in this embodiment of this application exists in the indirect light calculation phase during running of a rendering engine. During running, the program code in this embodiment of this application runs a host memory and a GPU memory. FIG. 7 shows an implementation form of this embodiment of this application in a server and platform software. Apart shown in a dashed box is a module added based on existing platform software in this embodiment of this application. In the indirect light calculation phase of the rendering engine, in this embodiment of this application, three phases are added: calculating a radiance of an intersection point in a shadow map manner (3041), generating a resolution-reduced irradiance map (3043), and performing indirect light calculation in a neighborhood search manner (3044). In a final result outputting phase (3051), illumination shading and synthesis are performed in combination with results of direct light calculation (3031) and indirect light calculation (3044), to achieve a global illumination effect.

Innovation content of this embodiment of this application is mainly embodied in the indirect light calculation phase. A core idea is to use the shadow map instead of a shadow ray to perform direct light shading in the probe update phase, then render the resolution-reduced irradiance map in the probe shading phase, and perform indirect light shading in the neighborhood search manner, to eliminate an aliasing problem. Finally, the indirect light shading result and direct light are superimposed and output, to achieve the global illumination effect.

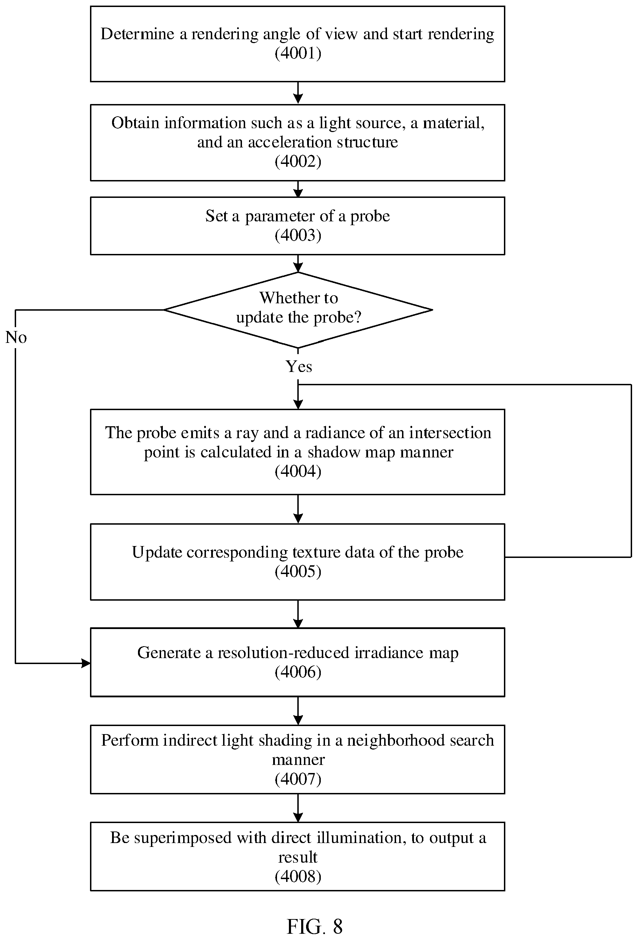

With reference to FIG. 8, a specific implementation of the method in this embodiment of this application is described in detail. Before formal rendering is started, after setting a rendering scene, a user may select a rendering angle of view. The angle of view determines content of an image during final imaging, and also affects a contribution of a light source in the scene to imaging. After scene parsing is completed, information such as a light source, a material, and an acceleration structure of geometric data of the scene is obtained, for indirect light calculation. Before indirect light calculation, a parameter of the probe in the scene needs to be initialized. It should be determined, based on an actual scene, whether the probe needs to be updated this time or previous probe information is still used. When the probe needs to be updated, two steps are mainly performed: 1. Perform intersection on a ray emitted by each probe and a scene acceleration structure, and shade an intersection point. Shading includes two parts: direct light shading and indirect light shading. The direct light shading of the intersection point is in a shadow map manner, to determine visibility between the intersection point and the light source, so as to calculate direct illumination of the current point. The indirect light shading of the intersection point is in a probe interpolation manner, to perform weighted calculation on a probe of a neighboring grid based on a distance, so as to obtain indirect illumination of the intersection point. 2. Obtain the texture information of the probe through calculation based on a shading value of each intersection point and the texture information of the previous probe in a weighted average value manner. Indirect illumination of an imaging point may be calculated based on the texture information of the probe. Two key steps are performed: 1. Render a resolution-reduced irradiance map based on an imaging resolution. Weighted interpolation is performed on each pixel in the irradiance map by querying texture information of an adjacent probe. 2. Perform indirect light shading on a pixel of an original resolution based on the irradiance map and according to a neighborhood search policy. In the neighborhood search policy, a pixel within a specific range around a corresponding point of the irradiance map is used as a candidate value, and determining is performed based on conditions such as a normal and a distance. If a threshold condition is met, the candidate value is directly selected for calculating the indirect illumination; otherwise, an average value of points within the range is used to calculate the indirect illumination. The indirect illumination and the direct illumination are superimposed, to be used as a final synthesis output.

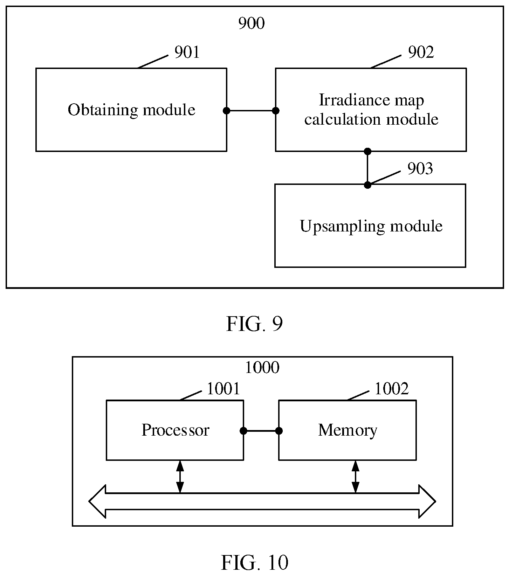

As shown in FIG. 9, an embodiment of this application further provides a rendering apparatus. The apparatus is used in a terminal device, and the apparatus includes an obtaining module 901, an irradiance map calculation module 902, and an upsampling module 903.

The obtaining module 901 is configured to obtain texture information of a light probe in a to-be-rendered virtual scene.

For a specific description of the obtaining module 901, refer to the description of step 301 in the foregoing embodiment, and details are not described herein again.

The irradiance map calculation module 902 is configured to perform illumination calculation on the virtual scene based on the texture information of the light probe, to obtain a first irradiance map, where a resolution of the first irradiance map is less than a resolution required by a rendering result of the virtual scene.

For a specific description of the irradiance map calculation module 902, refer to the description of step 302 in the foregoing embodiment, and details are not described herein again.

The upsampling module 903 is configured to perform upsampling on the first irradiance map, to obtain a second irradiance map, where a resolution of the second irradiance map and the resolution required by the rendering result of the virtual scene are the same, and the second irradiance map is used to perform indirect light rendering of the virtual scene.

For a specific description of the upsampling module 903, refer to the description of step 303 in the foregoing embodiment, and details are not described herein again.

In a possible implementation, an aspect ratio of the first irradiance map is consistent with an aspect ratio of the second irradiance map, and a quantity of pixel points of the first irradiance map is less than a quantity of pixel points of the second irradiance map.

In a possible implementation, the obtaining module is further configured to:
obtain direct light light source information in the virtual scene; and
the irradiance map calculation module is further configured to:
   perform illumination calculation on the virtual scene based on the direct light light source information in a shadow map (shadow map) manner, to obtain a third irradiance map, where the third irradiance map is used to perform direct light rendering of the virtual scene.

In a possible implementation, the upsampling module is specifically configured to:
perform upsampling on the first irradiance map according to a neighborhood search algorithm, to obtain the second irradiance map.

In a possible implementation, the first irradiance map includes a plurality of first pixel points, the second irradiance map includes a second pixel point, the second pixel point corresponds to a target pixel point in the first irradiance map in location, the target pixel point is adjacent to the plurality of first pixel points, and the upsampling module is specifically configured to:
based on information indicating that there is a first pixel point of which similarity to the target pixel point is greater than a threshold in the plurality of first pixel points, obtain the second pixel point based on the first pixel point of which similarity is greater than the threshold.

In a possible implementation, the upsampling module is specifically configured to:
perform average value calculation on the plurality of first pixel points based on information indicating that there is no first pixel point of which similarity to the target pixel point is greater than the threshold in the plurality of first pixel points, to obtain the second pixel point.

In a possible implementation, the neighborhood search algorithm is used to perform anti-aliasing on the first irradiance map.

In a possible implementation, the irradiance map calculation module is specifically configured to:
obtain texture information of an adjacent light probe of each pixel in the first irradiance map; and
perform weighted-based interpolation on the texture information of the adjacent light probe.

FIG. 10 is a schematic diagram of a structure of a terminal device 1000 according to this application. As shown in FIG. 10, the terminal device includes a processor 1001 and a memory 1002. The CPU is configured to obtain code of the memory to perform the steps in the embodiment described in FIG. 3.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, or another network device) to perform all or some of the steps of the methods described in the embodiment in FIG. 2 of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application

## Claims

1. A rendering method, wherein the method is applied to a terminal device, and the method comprises:
obtaining texture information of a light probe in a to-be-rendered virtual scene;
performing illumination calculation on the virtual scene based on the texture information of the light probe, to obtain a first irradiance map, wherein a resolution of the first irradiance map is less than a resolution required by a rendering result of the virtual scene; and
performing upsampling on the first irradiance map, to obtain a second irradiance map, wherein a resolution of the second irradiance map and the resolution required by the rendering result of the virtual scene are the same, and the second irradiance map is used to perform indirect light rendering of the virtual scene.

2. The method according to claim 1, wherein an aspect ratio of the first irradiance map is consistent with an aspect ratio of the second irradiance map, and a quantity of pixel points of the first irradiance map is less than a quantity of pixel points of the second irradiance map.

3. The method according to claim 1 or 2, wherein the method further comprises:
obtaining direct light light source information in the virtual scene; and
performing illumination calculation on the virtual scene based on the direct light light source information in a shadow map (shadow map) manner, to obtain a third irradiance map, wherein the third irradiance map is used to perform direct light rendering of the virtual scene.

4. The method according to any one of claims 1 to 3, wherein the performing upsampling on the first irradiance map, to obtain a second irradiance map comprises:
performing upsampling on the first irradiance map according to a neighborhood search algorithm, to obtain the second irradiance map.

5. The method according to claim 4, wherein the first irradiance map comprises a plurality of first pixel points, the second irradiance map comprises a second pixel point, the second pixel point corresponds to a target pixel point in the first irradiance map in location, the target pixel point is adjacent to the plurality of first pixel points, and the performing upsampling on the first irradiance map according to a neighborhood search algorithm, to obtain the second irradiance map comprises:
based on information indicating that there is a first pixel point of which similarity to the target pixel point is greater than a threshold in the plurality of first pixel points, obtaining the second pixel point based on the first pixel point of which similarity is greater than the threshold.

6. The method according to claim 5, wherein the method further comprises:
performing average value calculation on the plurality of first pixel points based on information indicating that there is no first pixel point of which similarity to the target pixel point is greater than the threshold in the plurality of first pixel points, to obtain the second pixel point.

7. The method according to any one of claims 4 to 6, wherein the neighborhood search algorithm is used to perform anti-aliasing on the first irradiance map.

8. The method according to any one of claims 1 to 7, wherein the performing illumination calculation on the virtual scene based on the texture information of the light probe comprises:
obtaining texture information of an adjacent light probe of each pixel in the first irradiance map; and
performing weighted-based interpolation on the texture information of the adjacent light probe.

9. A rendering apparatus, wherein the apparatus is used in a terminal device, and the apparatus comprises:
an obtaining module, configured to obtain texture information of a light probe in a to-be-rendered virtual scene;
an irradiance map calculation module, configured to perform illumination calculation on the virtual scene based on the texture information of the light probe, to obtain a first irradiance map, wherein a resolution of the first irradiance map is less than a resolution required by a rendering result of the virtual scene; and
an upsampling module, configured to perform upsampling on the first irradiance map, to obtain a second irradiance map, wherein a resolution of the second irradiance map and the resolution required by the rendering result of the virtual scene are the same, and the second irradiance map is used to perform indirect light rendering of the virtual scene.

10. The apparatus according to claim 9, wherein an aspect ratio of the first irradiance map is consistent with an aspect ratio of the second irradiance map, and a quantity of pixel points of the first irradiance map is less than a quantity of pixel points of the second irradiance map.

11. The apparatus according to claim 9 or 10, wherein the obtaining module is further configured to:
obtain direct light light source information in the virtual scene; and
the irradiance map calculation module is further configured to:
perform illumination calculation on the virtual scene based on the direct light light source information in a shadow map (shadow map) manner, to obtain a third irradiance map, wherein the third irradiance map is used to perform direct light rendering of the virtual scene.

12. The apparatus according to any one of claims 9 to 11, wherein the upsampling module is specifically configured to:
perform upsampling on the first irradiance map according to a neighborhood search algorithm, to obtain the second irradiance map.

13. The apparatus according to claim 12, wherein the first irradiance map comprises a plurality of first pixel points, the second irradiance map comprises a second pixel point, the second pixel point corresponds to a target pixel point in the first irradiance map in location, the target pixel point is adjacent to the plurality of first pixel points, and the upsampling module is specifically configured to:
based on information indicating that there is a first pixel point of which similarity to the target pixel point is greater than a threshold in the plurality of first pixel points, obtain the second pixel point based on the first pixel point of which similarity is greater than the threshold.

14. The apparatus according to claim 13, wherein the upsampling module is specifically configured to:
perform average value calculation on the plurality of first pixel points based on information indicating that there is no first pixel point of which similarity to the target pixel point is greater than the threshold in the plurality of first pixel points, to obtain the second pixel point.

15. The apparatus according to any one of claims 12 to 14, wherein the neighborhood search algorithm is used to perform anti-aliasing on the first irradiance map.

16. The apparatus according to any one of claims 9 to 15, wherein the irradiance map calculation module is specifically configured to:
obtain texture information of an adjacent light probe of each pixel in the first irradiance map; and
perform weighted-based interpolation on the texture information of the adjacent light probe.

17. A nonvolatile computer-readable storage medium, wherein the nonvolatile readable storage medium comprises computer instructions, used to perform the rendering method according to any one of claims 1 to 8.

18. A computing device, wherein the computing device comprises a memory and a processor, the memory stores code, and the processor is configured to obtain the code, to perform the rendering method according to any one of claims 1 to 8.

19. A computer program product, wherein the computer program product comprises code, and when the code is executed, the rendering method according to any one of claims 1 to 8 is implemented.
